(19) Europäisches Patentamt
European Patent Office
Office européen des brevets

(11) Veröffentlichungsnummer: **0 273 170 B1**

(12) **EUROPÄISCHE PATENTSCHRIFT**

(45) Veröffentlichungstag der Patentschrift: **09.10.91**

(51) Int. Cl.5: **C09D 5/44**, C08G 59/66

(21) Anmeldenummer: **87116879.5**

(22) Anmeldetag: **16.11.87**

Verbunden mit 88900015.4/0333759
(europäische
Anmeldenummer/Veröffentlichungsnummer)
durch Entscheidung vom 19.02.91.

(54) **Kathodisch abscheidbare wasserverdünnbare Überzugszusammensetzungen und Verfahren zur Herstellung von kathodisch abscheidbaren wasserverdünnbaren Bindemitteln.**

(30) Priorität: **18.11.86 DE 3639488**

(43) Veröffentlichungstag der Anmeldung:
**06.07.88 Patentblatt 88/27**

(45) Bekanntmachung des Hinweises auf die Patenterteilung:
**09.10.91 Patentblatt 91/41**

(84) Benannte Vertragsstaaten:
**AT BE CH DE ES FR GB IT LI NL SE**

(56) Entgegenhaltungen:
**EP-A- 0 198 783**
**FR-A- 1 132 035**
**FR-A- 2 329 727**
**US-A- 4 017 438**
**US-A- 4 252 703**

(73) Patentinhaber: **BASF Lacke + Farben Aktiengesellschaft**
**Max-Winkelmann-Strasse 80**
**W-4400 Münster(DE)**

(72) Erfinder: **Geist, Michael, Dr.**
**Rubensstrasse 251**
**W-4400 Münster(DE)**
Erfinder: **Fobbe, Helmut, Dr.**
**Liebigweg 5**
**W-4400 Münster(DE)**
Erfinder: **Cibura, Klaus, Dr.**
**25680 W. Twelve Mile Road Appartment 302**
**Southfield Michigan 48086(US)**
Erfinder: **Ott, Günther, Dr.**
**Von-Holte-Strasse 101 a**
**W-4400 Münster(DE)**

**Beschreibung**

Die Erfindung betrifft kathodisch abscheidbare wasserverdünnbare Bindemittel, die mit Säuren neutralisierte über Ketimingruppen eingeführte primäre Aminogruppen enthalten.

Kathodisch abscheidbare wasserverdünnbare Bindemittel werden zur Herstellung von Elektrotauchlakken für die kationische Elektrotauchlackierung benötigt. Die kationische Elektrotauchlackierung ist ein vor allem zum Grundieren häufig angewandtes Lackierverfahren, bei dem wasserverdünnbare kationische Gruppen tragende Kunstharze mit Hilfe von Gleichstrom auf elektrisch leitende Körper aufgebracht werden.

Es hat sich herausgestellt, daß die Anwesenheit von primären Aminogruppen in den Bindemittelmolekülen einen positiven Einfluß auf die Qualität der erhaltenen Beschichtungen hat.

Zur Einführung von primären Aminogruppen in die Bindemittelmoleküle wurde vorgeschlagen, Epoxidgruppen enthaltende Kunstharze mit (Poly)ketiminen, die Hydroxylgruppen oder sekundäre Aminogruppen enthalten, umzusetzen und die primären Aminogruppen anschließend hydrolytisch freizusetzen (vgl. US-PS-3,947,339, US-PS-4,017,438, US-PS-4,104,147 und US-PS-4,148,772).

Die Einführung von primären Aminogruppen über Hydroxyl-oder sekundäre Aminogruppen enthaltende Ketiminderivate hat unter anderem den Nachteil, daß diese Ketiminderivate mit den Epoxidgruppen so langsam abreagieren, daß störende Nebenreaktionen ablaufen können und im Reaktionsansatz nicht umgesetzte Ketiminderivate verbleiben. Diese nicht umgesetzten Ketiminderivate werden in der wäßrigen Phase zu niedermolekularen Aminen hydrolysiert, die die Eigenschaften der elektrisch abgeschiedenen und eingebrannten Überzüge negativ beeinflussen.

Der vorliegenden Erfindung liegt die Aufgabe zugrunde, verbesserte Bindemittel der eingangs genannten Art bereitzustellen.

Diese Aufgabe wird durch Bindemittel gelöst, die hergestellt worden sind durch Umsetzung von

(A) einem Epoxidgruppen enthaltenden Kunstharz mit

(B) mindestens einer Verbindung, die neben einer gegenüber Epoxidgruppen reaktiven Mercaptogruppe auch noch mindestens eine Ketimingruppe aufweist und gegebenenfalls

(C) weiteren modifizierenden Verbindungen wie z.B. Monocarbonsäuren und/oder weiteren primären und/oder sekundären Aminen

und anschließend mit einer Säure neutralisiert worden sind.

Als Komponente (A) können alle als Ausgangsstoffe für die Herstellung von kathodisch abscheidbaren, wasserverdünnbaren Bindemitteln geeigneten epoxidgruppenhaltigen Kunstharze verwendet werden (vgl. z.B. US-PS-3,947,399, US-PS-4,017,438, US-PS-4,104,147, US-PS-4,148,772 und EP 4090). Als Beispiele seien gegebenenfalls modifizierte Polyglycidylether von Polyphenolen, Polyglycidylester, epoxidgruppenhaltige Polyacrylate und epoxidiertes Polybutadien genannt.

Bevorzugt werden als Komponente (A) aus Polyphenolen, vorzugsweise Bisphenol A, und Epihalohydrinen hergestellte Polyglycidylether eingesetzt.

Besonders bevorzugt werden die gut bekannten modifizierten Polyglycidylether von Polyphenolen, vorzugsweise Bisphenol A, eingesetzt. Besonders bevorzugt eingesetzte modifizierte Polyglycidylether von Polyphenolen, vorzugsweise Bisphenol A, sind die durch Umsetzung mit mindestens einer Verbindung, die eine oder mehrere, bevorzugt zwei, an aromatische und/oder (cyclo)aliphatische Molekülfragmente gebundene Hydroxylgruppen pro Molekül enthält, modifizierten Polyglycidylether von Polyphenolen (vgl. z.B. Deutsche Patentanmeldung P 36 18 157.9).

Als Komponente (B) werden Verbindungen eingesetzt, die neben einer gegenüber Epoxidgruppen reaktiven Mercaptogruppe auch noch mindestens eine Ketimingruppe aufweisen. Die Verbindungen können neben der Mercapto- und Ketimingruppe noch weitere funktionelle Gruppen enthalten, wenn diese Gruppen die Bindemittelsynthese nicht stören.

Als Komponente (B) werden bevorzugt Verbindungen der allgemeinen Formel

$$HS\text{-}R^1\text{-}(N = CR^2R^3)_n \qquad (I),$$

in der $R^1$ für eine organische Gruppe, vorzugsweise eine Alkylengruppe, $R^2$ und $R^3$ für organische Gruppen, vorzugsweise Alkylgruppen mit 1 bis 4 C-Atomen, wobei $R^2$ und $R^3$ zusammen auch einen cycloaliphatischen Ring bilden können, und n für eine ganze Zahl $\geq 1$ steht, eingesetzt. Diese Verbindungen können durch Ketiminisierung von Mercaptoverbindungen der allgemeinen Formel $HS\text{-}R^1\text{-}(NH_2)_n$ ($R^1$ steht für eine organische Gruppe, vorzugsweise eine Alkylengruppe, n für eine ganze Zahl $\geq 1$) mit Ketonen der allgemeinen Formel $O = CR^2R^3$ ($R^2$ und $R^3$ stehen für organische Gruppen, vorzugsweise Alkylgruppen mit 1 bis 4 C-Atomen, wobei $R^2$ und $R^3$ zusammen auch einen cycloaliphatischen Ring bilden können) leicht hergestellt werden. Erfindungsgemäße (B)-Komponenten können z.B. durch Umsetzung von 2-Mercaptoethylamin mit Aceton, Methylethylketon, Methylisobutylketon, Cyclohexanon, Cyclopentanon oder Acetophenon hergestellt werden. Bevorzugt wird Methylisobutylketon verwendet.

Weiter werden bevorzugt Verbindungen der allgemeinen Formel $HS-R^4-CO-NR^5-R^6-N=CR^7R^8$ (II) ($R^4$ steht für eine organische Gruppe, vorzugsweise eine Alkylengruppe, $R^5$ für eine organische Gruppe, vorzugsweise eine Alkylgruppe, oder für $-R^6-N=CR^7R^8$, $R^6$ für eine organische Gruppe, vorzugsweise für eine Alkylengruppe und $R^7$ und $R^8$ für organische Gruppen, vorzugsweise Alkylgruppen mit 1 bis 4 C-Atomen, wobei $R^7$ und $R^8$ zusammen auch einen cycloaliphatischen Ring bilden können) als Komponente (B) eingesetzt.

Verbindungen dieser Art können z.B. durch Umsetzung von Mercaptocarbonsäuren oder Mercaptocarbonsäureestern mit den entsprechenden Ketiminen nach den folgenden Reaktionsgleichungen hergestellt werden (die Reste $R^4$ bis $R^8$ haben dieselbe Bedeutung wie oben beschrieben):

$$HS-R^4-COOH + HNR^5-R^6-N=CR^7R^8 \rightarrow (II) + H_2O$$
$$HS-R^4-COOR^9 + HNR^5-R^6-N=CR^7R^8 \rightarrow (II) + HOR^9$$

$R^9$ steht für einen organischen Rest, vorzugsweise einen Alkylrest mit 1 bis 4 C-Atomen.

Die in den obigen Reaktionsgleichungen aufgeführten Ketimine können durch Umsetzung der entsprechenden primär-sekundären Polyamine mit entsprechenden Ketonen nach gut bekannten Methoden leicht hergestellt werden. Als Beispiele für geeignete primär-sekundäre Polyamine seien Diethylentriamin, Dipropylentriamin, Dihexylentriamin und Hydroxyethylaminoethylamin genannt.

Die Komponenten (A) und (B) können entweder in solchen Mengenverhältnissen umgesetzt werden, daß das Reaktionsprodukt keine Epoxidgruppen mehr enthält oder daß das Reaktionsprodukt noch freie Epoxidgruppen enthält, die dann je nach gewünschten Produkteigenschaften noch für weitere Modifizierungsreaktionen, wie z.B. Umsetzung mit Monocarbonsäuren wie z.B. Fettsäuren oder Versaticsäure und/oder primären und/oder sekundären Aminen, wie z.B. Methylethanolamin oder Dikokosamin, genutzt werden können. Selbstverständlich können auch die im Reaktionsprodukt vorhandenen Hydroxylgruppen für weitere Modifizierungsreaktionen herangezogen werden.

Die erfindungsgemäßen Bindemittel können durch weitere allgemein bekannte Methoden in selbstvernetzende Systeme überführt werden und/oder zusammen mit Vernetzern wie z.B. blockierten Polyisocyanaten, Phenolharzen, Melaminharzen oder Verbindungen mit aktivierten Esterbindungen als fremdvernetzende Systeme eingesetzt werden.

Ein selbstvernetzendes System kann z.B. dadurch erhalten werden, daß das Bindemittel mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird.

Schließlich wird das erhaltene Bindemittel unter Zugabe von wasserlöslichen Säuren (z.B. Ameisensäure, Milchsäure, Propionsäure ...) und unter Hydrolyse der Ketimingruppen in Wasser dispergiert und nach gut bekannten Methoden zu einem wäßrigen Elektrotauchlack weiterverarbeitet.

Die Erfindung betrifft auch ein Verfahren zur Herstellung von kathodisch abscheidbaren wasserverdünnbaren Bindemitteln, die mit Säuren neutralisierte über Ketimingruppen eingeführte primäre Aminogruppen enthalten.

Dieses Verfahren zeichnet sich dadurch aus, daß

(A) ein Epoxidgruppen enthaltendes Kunstharz mit

(B) mindestens einer Verbindung, die neben einer gegenüber Epoxidgruppen reaktiven Mercaptogruppe auch noch mindestens eine Ketimingruppe aufweist und gegebenenfalls noch mit

(C) weiteren modifizierenden Verbindungen, wie z.B. Monocarbonsäuren und/oder weiteren primären und/oder sekundären Aminen

umgesetzt und das erhaltene Reaktionsprodukt mit einer Säure neutralisiert wird.

Die Reaktion des Epoxidharzes mit der Komponente (B) wird vorzugsweise bei Temperaturen zwischen 50 und 180 °C durchgeführt und kann z.B. durch Zusatz von Zinnoctoat oder Ethyltriphenylphosphoniumjodid katalysiert werden. Die Reaktionsbedingungen sind so zu wählen, daß die blockierten primären Aminogruppen erst dann freigesetzt werden, wenn keine Möglichkeiten zur Bildung höhermolekularer Produkte mehr gegeben sind.

Die Erfindung betrifft auch wasserverdünnbare Überzugszusammensetzungen zur Herstellung von vorzugsweise kathodisch abgeschiedenen hitzehärtbaren Überzügen, deren Bindemittel zumindest zum Teil aus Bindemitteln bestehen, die mit Säuren neutralisierte über Ketimingruppen eingeführte primäre Aminogruppen enthalten und die dadurch gekennzeichnet sind, daß die primäre Aminogruppen enthaltenden Bindemittel hergestellt worden sind durch Umsetzung von

(A) einem Epoxidgruppen enthaltenden Kunstharz mit

(B) mindestens einer Verbindung, die neben einer gegenüber Epoxidgruppen reaktiven Mercaptogruppe auch noch mindestens eine Ketimingruppe aufweist und gegebenenfalls

(C) weiteren modifizierenden Verbindungen, wie z.B. Monocarbonsäuren und/oder weiteren primären und/oder sekundären Aminen

und anschließend mit einer Säure neutralisiert worden sind.

Die erfindungsgemäßen Überzugszusammensetzungen können neben dem Bindemittel noch weitere übliche Zusätze, wie z.B. Vernetzer, koaleszierende Lösemittel, Pigmente, oberflächenaktive Mittel, Vernetzungskatalysatoren, Antioxidantien, Füllstoffe, Antischaummittel usw. enthalten.

Die mit Hilfe der erfindungsgemäßen Bindemittel zubereiteten wasserverdünnbaren Überzugszusammensetzungen sind insbesondere für das kationische Elektrotauchlackierverfahren geeignet; sie können aber auch in konventionellen Beschichtungsverfahren eingesetzt werden. Als Beschichtungssubstrate können z.B. gegebenenfalls vorbehandelte Metalle, wie Eisen, Stahl, Kupfer, Zink, Messing, Magnesium, Zinn, Nickel, Chrom und Aluminium, aber auch imprägniertes Papier und andere elektrisch leitende Substrate benutzt werden.

Die mit der Erfindung erzielten Vorteile bestehen insbesondere darin, daß die aus den erfindungsgemäßen Bindemitteln hergestellten Überzugszusammensetzungen einen- im Vergleich zum Stand der Technik - geringeren Anteil an niedermolekularen Aminen aufweisen, was sich auf die Eigenschaften der elektrisch abgeschiedenen und eingebrannten Überzüge positiv auswirkt.

Die Erfindung wird in den folgenden Beispielen näher erläutert. Alle Angaben über Teile und Prozentsätze sind Gewichtsangaben, falls nicht ausdrücklich etwas anderes festgestellt wird.

Beispiel 1 - Darstellung eines Mercaptoalkylketimins

In einer geeigneten Reaktionsapparatur, bestehend aus Reaktionsgefäß, Rühreinrichtung und Wasserabscheider werden unter Inertgas 309 Teile trockenes Diethylentriamin in 400 Teilen Methylisobutylketon gelöst. Die Reaktionsvorlage wird langsam auf 145 °C erhitzt, wobei sich unter Rückfluß innerhalb von 4 h 103 g Wasser im Abscheider sammeln. Die resultierende Ketiminlösung wird anschließend bei Raumtemperatur mit 325 Teilen 3-Mercaptopropionsäure versetzt. Unter Normaldruck werden bei 130 bis 160 °C 51 g Wasser (94,4 % d.Th.) ausgekreist und die Mercaptoalkylketiminlösung mit Methylisobutylketon auf 80% angelöst. Aminäquivalentgewicht: 221 g/mol Amin.

Beispiel 2 - Darstellung eines Vernetzers I

Gemäß der DE-OS 27 01 002, Beispiel 1, wird ein geblockter Isocyanatvernetzer hergestellt, indem 218 Teile 2-Ethylhexanol langsam unter Rühren in einer Stickstoffatmosphäre zu 291 Teilen einer 80/20 Isomerenmischung von 2,4-/2,5-Toluylendiisocyanat gegeben werden, wobei die Reaktionstemperatur durch äußere Kühlung unter 38 °C gehalten wird. Der Ansatz wird noch eine weitere halbe Stunde bei 38 °C gehalten und dann auf 60 °C erwärmt, wonach 75 Teile Trimethylolpropan und anschließend 0,08 Teile Dibutylzinndilaurat als Katalysator zugegeben werden. Nach einer exothermen Reaktion zu Beginn wird der Ansatz 1,5 Stunden bei 121 °C gehalten, bis im wesentlichen die gesamten Isocyanatgruppen verbraucht sind, was an dem Infrarotspektrum zu erkennen ist. Der Ansatz wird dann mit 249 Teilen Ethylenglykolmonoethylether verdünnt.

Beispiel 3 - Darstellung eines Vernetzers II

Gemäß der EP 57 389, Beispiel 1, wird ein Polyestervernetzer hergestellt. 109 Teile Pentaerythrit werden mit 474 Teilen Phthalsäureanhydrid in einem Reaktionsgefäß mit Rückflußkühler, Rührer, Innenthermometer und Gaseinleitung vermengt und unter Stickstoff auf 140 °C aufgeheizt. Die Reaktion verläuft danach exotherm und wird durch Kühlen bei 160 °C gehalten. Bei einer Säurezahl von 305 wird der Ansatz gekühlt und mit 300 Teilen Methylisobutylketon versetzt. Bei 90 °C werden langsam 231 Teile Butylenoxid zugetropft und der Ansatz bei der Temperatur gehalten, bis die Säurezahl auf Null gefallen ist.

Beispiel 4 - Herstellung einer Dispersion I

Ein Reaktor, der mit einer Heizeinrichtung, einem Rührer, einem Kühler, einem Thermometer und einem Stickstoffeinlaß ausgerüstet ist, wird mit 837 Teilen eines Bisphenol-A-Epoxidharzes mit einem Epoxidäquivalentgewicht von 188, 72 Teilen Xylol, 254 Teilen Bisphenol A und 3 Teilen Dimethylbenzylamin beschickt. Die Temperatur wird auf 130 °C angehoben und die Reaktion durchgeführt, bis ein Epoxidäquivalentgewicht von 480 erreicht ist. Danach werden 300 Teile eines handelsüblichen Polycaprolactondiols mit dem Molekulargewicht von 535 und weitere 3 Teile Dimethylbenzylamin zugefügt. Die Reaktion wird bei 130° C weitergeführt, bis das Reaktionsgemisch ein Epoxidäquivalentgewicht von 1200 aufweist. Danach werden 1200 Teile des zuvor beschriebenen Vernetzers II zugesetzt. Durch externe Kühlung wird die Reaktionstemperatur auf 99° C gesenkt. Es werden 300 Teile des im Beispiel 1 beschriebenen Mercaptoalkylketimins sowie 66 Teile N-Methylethanolamin zudosiert, wobei die Reaktionstemperatur durch Kühlen unterhalb 110° C gehalten wird. Danach wird der Reaktionsansatz mit 137 Teilen Hexylmonoglykolether verdünnt, auf 90° C abgekühlt und ausgetragen. Es resultiert eine klare Harzlösung.

Inzwischen wird ein Dispergierbad aus 1485 Teilen entionisiertem Wasser, 26 Teilen Eisessig und 2 Teilen eines handelsüblichen Entschäumers vorbereitet, in das 2700 g der zuvor beschriebenen Harzlösung unter Rühren eingetragen werden. Man läßt das Dispergiergemisch zwei Stunden rühren, gibt dann weitere 1825 Teile entionisiertes Wasser zu. Es resultiert eine niederviskose Dispersion mit einem experimentell ermittelten Feststoffgehalt von 36,0 %.

Beispiel 5 - Herstellung einer Dispersion II

In einer geeigneten Reaktionsapparatur werden 2000 Teile eines handelsüblichen Bisphenol-A-Epoxidharzes (Epoxidequivalentgewicht 500), 116 Teile Xylol, 262 Teile Dodecylphenol und 314 Teile Dimenthylbenzylamin bei 130° C so lange umgesetzt, bis ein Epoxidequivalentgewicht von 1100 erreicht wird. Danach werden bei 110° C 270 Teile Xylol, 145 Teile Hexylglykol und 160 Teile Diethanolamin zugegeben, nach weiteren 15 Minuten 100 Teile des in Beispiel 1 beschriebenen Mercaptoalkylketimins sowie 200 Teile Butylglykol und 350 Teile Isobutanol. Man läßt den Reaktorinhalt 60 min bei 100° C abreagieren, kühlt auf 90° C und trägt die klare Harzlösung aus.

1120 Teile der warmen Harzlösung werden in ein Dispergierbad, zusammengesetzt aus 752 Teilen entionisiertem Wasser, 350 Teilen des in Beispiel 3 beschriebenen Vernetzers II, 2 Teilen eines handelsüblichen Entschäumers und 13 Teilen Eisessig eingetragen. Nach zwei Stunden Rühren werden weitere 960 Teile entionisiertes Wasser zugegeben. Man erhält eine niederviskose Dispersion mit einem experimentell bestimmten Festkörper von 36,8 %.

Zubereitung der Elektrotauchbäder und Abscheidung von Lackfilmen

In einem geeigneten Gefäß werden 1675 Teile entionisiertes Wasser vorgelegt und mit 25 Teilen 10%iger Essigsäure versetzt. In diese Lösung werden 2279 Teile der Bindemitteldispersion und 775 Teile der in der EP 102 501 B 1 (Beispiel 7) beschriebenen Pigmentpaste eingerührt und mit 246 Teilen entionisiertem Wasser aufgefüllt. Vor den Abscheidungen werden die Lackbäder 3 Tage unter Rühren gealtert.

Die Abscheidung der Lackfilme erfolgt bei 300 V während 2 Minuten auf zinkphosphatierten Stahlblechen, die als Kathode geschaltet werden. Nach der üblichen Nachbehandlung werden die Filme bei 180° C während 20 Minuten eingebrannt.

# EP 0 273 170 B1

| Bad | I | II |
|---|---|---|
| Schichtdicke ( µm) | 20 | 23 |
| bei Spannung (V) | 300 | 370 |
| Verlauf* | 1,0 | 1,5 |
| Kraterbewertung* | 0,5 | 0,5 |
| Gitterschnitt* | 0 | 0 |
| Reverse Impact (inch pounds) | 80 | 80 |
| L (Bad)** | 1,11 | 1,06 |

\*   O = bester Wert

    5 = schlechtester Wert

\*\* Leitfähigkeit des Lackbades in $10^{-9}S.cm^{-1}$

**Patentansprüche**

1.  Kathodisch abscheidbare wasserverdünnbare Bindemittel, die mit Säuren neutralisierte über Ketimingruppen eingeführte primäre Aminogruppen enthalten, dadurch gekennzeichnet, daß sie hergestellt
    worden sind durch Umsetzung von
    (A) einem Epoxidgruppen enthaltenden Kunstharz mit
    (B) mindestens einer Verbindung, die neben einer gegenüber Epoxidgruppen reaktiven Mercaptogruppe auch noch mindestens eine Ketimingruppe aufweist und gegebenenfalls
    (C) weiteren modifizierenden Verbindungen, wie z.B. Monocarbonsäuren und/oder weiteren primären
    und/oder sekundären Aminen
    und anschließend mit einer Säure neutralisiert worden sind.

2.  Wasserverdünnbare Überzugszusammensetzungen zur Herstellung von vorzugsweise kathodisch abgeschiedenen hitzehärtbaren Überzügen, deren Bindemittel zumindest zum Teil aus Bindemitteln bestehen, die mit Säuren neutralisierte über Ketimingruppen eingeführte primäre Aminogruppen enthalten,
    dadurch gekennzeichnet, daß die Bindemittel hergestellt worden sind durch Umsetzung von
    (A) einem Epoxidgruppen enthaltenden Kunstharz mit
    (B) mindestens einer Verbindung, die neben einer gegenüber Epoxidgruppen reaktiven Mercaptogruppe auch noch mindestens eine Ketimingruppe aufweist und gegebenenfalls
    (C) weiteren modifizierenden Verbindungen, wie, z.B. Monocarbonsäuren und/oder weiteren primären und/oder sekundären Aminen
    und anschließend mit einer Säure neutralisiert worden sind.

3.  Bindemittel oder Überzugszusammensetzungen nach den Ansprüchen 1 oder 2, dadurch gekennzeichnet, daß als Komponente (A) ein aus einem Polyphenol, vorzugsweise Bisphenol A, und einem
    Epihalohydrin hergestellter Polyglycidylether, eingesetzt worden ist.

4.  Bindemittel oder Überzugszusammensetzungen nach Anspruch 3, dadurch gekennzeichnet, daß als
    Komponente (A) ein modifizierter Polyglycidylether, vorzugsweise ein durch Umsetzung mit mindestens
    einer Verbindung, die eine oder mehrere, bevorzugt zwei, an aromatische und/oder (cyclo)aliphatische
    Molekülfragmente gebundene Hydroxylgruppen pro Molekül enthält, modifizierter Polyglycidylether,
    eingesetzt worden ist.

5.  Bindemittel oder Überzugszusammensetzungen nach einem der Ansprüche 1 bis 4, dadurch gekenn-

6

zeichnet, daß als Komponente (B) Verbindungen der allgemeinen Formel

$$HS-R^1-(N=CR^2R^3)_n \qquad (I),$$

in der $R^1$ für eine organische Gruppe, vorzugsweise eine Alkylengruppe, $R^2$ und $R^3$ für organische Gruppen, vorzugsweise Alkylgruppen mit 1 bis 4 C-Atomen, wobei $R^2$ und $R^3$ zusammen auch einen cycloaliphatischen Ring bilden können, und n für eine ganze Zahl $\geq 1$ steht, eingesetzt worden sind.

6. Bindemittel oder Überzugszusammensetzungen nach einem der Ansprüche 1 bis 5, dadurch gekennzeichnet, daß als Komponente (B) Verbindungen der allgemeinen Formel

$$HS-R^4-CO-NR^5-R^6-N=CR^7R^8 \qquad (II),$$

in der $R^4$ für eine organische Gruppe, vorzugsweise eine Alkylengruppe, $R^5$ für eine organische Gruppe, vorzugsweise eine Alkylgruppe, oder für $-R^6-N=CR^7R^8$, $R^6$ für eine organische Gruppe, vorzugsweise für eine Alkylengruppe und $R^7$ und $R^8$ für organische Gruppen, vorzugsweise Alkylgruppen mit 1 bis 4 C-Atomen, wobei $R^7$ und $R^8$ zusammen auch einen cycloaliphatischen Ring bilden können, stehen, eingesetzt worden sind.

7. Verfahren zur Herstellung von kathodisch abscheidbaren wasserverdünnbaren Bindemitteln, die mit Säuren neutralisierte über Ketimingruppen eingeführte primäre Aminogruppen enthalten, dadurch gekennzeichnet, daß
    (A) ein Epoxidgruppen enthaltendes Kunstharz mit
    (B) mindestens einer Verbindung, die neben einer gegenüber Epoxidgruppen reaktiven Mercaptogruppe auch noch mindestens eine Ketimingruppe aufweist und gegebenenfalls noch mit
    (C) weiteren modifizierenden Verbindungen, wie. z.B. Monocarbonsäuren und/oder weiteren primären und/oder sekundären Aminen,
umgesetzt und das erhaltene Reaktionsprodukt mit einer Säure neutralisiert wird.

## Claims

1. A cathodic water-dilutable binder which contains primary amino groups neutralized with acids and introduced via ketimine groups, wherein the said binder has been prepared by reacting
    (A) a synthetic resin containing epoxy groups with
    (B) at least one compound which, in addition to a mercapto group which is reactive toward epoxy groups, also possesses at least one ketimine group and, if required,
    (C) further modifying compounds, such as, for example, monocarboxylic acids and/or further primary and/or secondary amines,
and has then been neutralized with an acid.

2. A water-dilutable coating composition for the production of heat-curable coatings which are preferably cathodically deposited and whose binders consist at least partially of binders which contain primary amino groups neutralized with acids and introduced via ketimine groups, wherein the binders have been prepared by reacting
    (A) a synthetic resin containing epoxy groups with
    (B) at least one compound which, in addition to a mercapto group which is reactive toward epoxy groups, also possesses at least one ketimine group and, if required,
    (C) further modifying compounds, such as, for example, monocarboxylic acids and/or other primary and/or secondary amines,
and have then been neutralized with an acid.

3. A binder or coating composition as claimed in claim 1 or 2, wherein a polyglycidyl ether prepared from a polyphenol, preferably bisphenol A, and an epihalohydrin has been used as component (A).

4. A binder or coating composition as claimed in claim 3, wherein a modified polyglycidyl ether, preferably a polyglycidyl ether modified by reaction with at least one compound which contains, per molecule, one or more, preferably two, hydroxyl groups bonded to aromatic and/ or (cyclo)aliphatic molecular fragments, has been used as component (A).

5. A binder or coating composition as claimed in one of claims 1 to 4, wherein a compound of the formula

$$HS\text{-}R^1\text{-}(N=CR^2R^3)_n \qquad (I)$$

in which $R^1$ represents an organic group, preferably an alkylene group, $R^2$ and $R^3$ represent organic groups, preferably alkyl groups having 1 to 4 C atoms, and $R^2$ and $R^3$ together can also form a cycloaliphatic ring, and n represents an integer $\geq 1$, has been used as component (B).

6. A binder or coating composition as claimed in one of claims 1 to 5, wherein a compound of the formula

$$HS\text{-}R^4\text{-}CO\text{-}NR^5\text{-}R^6\text{-}N=CR^7R^8 \qquad (II)$$

in which $R^4$ represents an organic group, preferably an akylene group, $R^5$ represents an organic group, preferably an alkyl group, or represents $-R^6\text{-}N=CR^7R^8$, $R^6$ represents an organic group, preferably an alkylene group, and $R^7$ and $R^8$ represent organic groups, preferably alkyl groups having 1 to 4 C atoms, and $R^7$ and $R^8$ together can also form a cycloaliphatic ring, has been used as component (B).

7. A process for the preparation of a cathodic water-dilutable binder which contains primary amino groups neutralized with acids and introduced via ketimine groups, wherein
(A) a synthetic resin containing epoxy groups is reacted with
(B) at least one compound which, in addition to a mercapto group which is reactive toward epoxy groups, also possesses at least one ketimine group and, if required, also with
(C) further modifying compounds, such as, for example, monocarboxylic acids and/or other primary and/or secondary amines,
and the reaction product obtained is neutralized with an acid.

**Revendications**

1. Liants diluables dans l'eau, pouvant être déposés à la cathode, qui contiennent des groupes amino primaires introduits par l'intermédiaire de groupes cétimine et neutralisés par des acides, caractérisés par le fait qu'ils ont été obtenus par réaction :

(A) d'une résine synthétique contenant des groupes époxyde avec
(B) au moins un composé, qui présente, en dehors d'un groupe mercapto capable de réagir vis-à-vis de groupes époxyde, également encore au moins un groupe cétimine, et, le cas échéant,
(C) d'autres composés modificateurs, comme, par exemple, des acides monocarboxyliques et/ou d'autres amines primaires et/ou secondaires,
puis ont été neutralisés par un acide.

2. Compositions de revêtement diluables dans l'eau pour la fabrication de revêtements durcissables par la chaleur, de préférence, déposés à la cathode, dont les liants se composent au moins en partie de liants qui contiennent des groupes amino primaires introduits par l'intermédiaire de groupes cétimine et neutralisés par des acides, caractérisées par le fait que les liants ont été obtenus par réaction :

(A) d'une résine synthétique contenant des groupes époxyde avec
(B) au moins un composé, qui présente, en dehors d'un groupe mercapto capable de réagir vis-à-vis de groupes époxyde, également encore au moins un groupe cétimine, et, le cas échéant,
(C) d'autres composés modificateurs, comme, par exemple, des acides monocarboxyliques et/ou d'autres amines primaires et/ou secondaires,
puis ont été neutralisés par un acide.

3. Liants ou compositions de revêtement selon les revendications 1 ou 2, caractérisé(e)s par le fait que, comme composant (A), a été utilisé un polyglycidyléther obtenu à partir d'un polyphénol, de préférence, le bisphénol A, et d'une épihalohydrine.

4. Liants ou compositions de revêtement selon la revendication 3, caractérisé(e)s par le fait que, comme composant (A), a été utilisé un polyglycidyléther modifié, de préférence, un polyglycidyléther modifié par réaction avec au moins un composé, qui contient, par molécule, un ou plusieurs, de préférence, deux groupes hydroxyle, liés à des fragments de molécule aromatiques et/ou (cyclo)aliphatiques.

5. Liants ou compositions de revêtement selon l'une des revendications 1 à 4, caractérisé(e)s par le fait que, comme composant (B), ont été utilisés des composés de la formule générale :

$$HS\text{-}R^1\text{-}(N = CR^2R^3)_n \quad (I),$$

dans laquelle :
- $R^1$ représente un groupe organique, de préférence, un groupe alkylène ;
- $R^2$ et $R^3$ représentent des groupes organiques, de préférence, des groupes alkyle ayant 1 à 4 atomes de carbone, où $R^2$ et $R^3$ peuvent former ensemble également un noyau cycloaliphatique ; et
- n représente un nombre entier $\geq 1$.

6. Liants ou compositions de revêtement selon l'une des revendications 1 à 5, caractérisé(e)s par le fait que, comme composant (B), ont été utilisés des composés de la formule générale :

$$HS\text{-}R^4\text{-}CO\text{-}NR^5\text{-}R^6\text{-}N\text{-}CR^7R^8 \quad (II),$$

dans laquelle :
- $R^4$ représente un groupe organique, de préférence, un groupe alkylène ;
- $R^5$ représente un groupe organique, de préférence, un groupe alkyle, ou un groupe $-R^6\text{-}N\text{-}CR^7R^8$, avec $R^6$ représentant un groupe organique, de préférence, un groupe alkylène, et $R^7$ et $R^8$ représentent des groupes organiques, de préférence, des groupes alkyle ayant 1 à 4 atomes de C, $R^7$ et $R^8$ pouvant former ensemble également un noyau cycloaliphatique.

7. Procédé de fabrication de liants diluables dans l'eau, pouvant être déposés à la cathode, qui contiennent des groupes amino primaires introduits par l'intermédiaire de groupes cétimine et neutralisés par des acides, caractérisé par le fait qu'on fait réagir :

(A) une résine synthétique contenant des groupes époxyde, avec
(B) au moins un composé, qui présente, en dehors d'un groupe mercapto capable de réagir vis-à-vis des groupes époxyde, également encore au moins un groupe cétimine, et, le cas échéant, encore avec
(C) d'autres composés modificateurs, comme, par exemple, des acides monocarboxylique et/ou d'autres amines primaires et/ou secondaires,

et qu'on neutralise le produit de réaction obtenu par un acide.